# EUROPEAN PATENT APPLICATION

(11) **EP 1 209 798 A1**
(43) Date of publication of application: **29.05.2002**
(21) Application number: 01125736.7
(22) Date of filing: 27.10.2001
(51) Int. Cl.: H02K 1/22, H02K 3/493

(54) **Wound salient-pole type rotor for an electric machine**

(30) Priority: 23.11.2000 LU 90683
(71) Applicant: Delphi Technologies, Inc., Troy, MI 48007 (US)
(72) Inventor: Mlynarz, Richard, 95530 La Frette/Seine (FR)
(74) Representative: Schmitt, Armand

(57) **Abstract**

A wound salient-pole type rotor for an electric machine, comprises:
a core armature (12) forming n radial pole pieces (14) equally spaced by 360/n degrees, each of the pole pieces (14) having a radially projecting web portion (16) and a circumferentially extending flange portion (18) terminating the web portion (16) so that the pole piece (14) has a substantially T-shaped cross-section, wherein the flange portions (18) of two adjacent pole pieces (14) define an axial slot (24) giving access to a coil chamber (26) between two web portions (16);
field coils (28) wound around the web portion (16) of at least every other pole piece (14), in the coil chambers (26); and
a closing permanent magnet (30) with a trapezoidal cross-section axially inserted in each of the slots (24), wherein each of the slots (24) has a trapezoidal cross-section radially tapering to the outside.

## Description

### Field of the invention

The present invention generally relates to a wound salient-pole type rotor for an electric machine, especially for a synchronous generator.

### Background of the invention

Such a rotor generally comprises a core armature forming n radial pole pieces equally spaced by 360/n degrees. Each of the pole pieces has a radially projecting web portion and a circumferentially extending flange portion terminating the web portion so that the pole piece has a substantially T-shaped cross-section. The flange portions of two adjacent pole pieces define an axial slot giving access to a coil chamber between two web portions. A field coil is wound around the web portion of each of the pole pieces, so that the field coils are located in the coil chambers underneath the flange portions.

### Object of the invention

An object of the present invention is to provide a wound salient-pole type rotor for an electric machine with an improved design. This object is achieved by a wound salient-pole type rotor as claimed in claim 1.

### Summary of the invention

A wound salient-pole type rotor for an electric machine in accordance with the invention comprises a core armature forming n radial pole pieces equally spaced by 360/n degrees. Each of the pole pieces has a radially projecting web portion and a circumferentially extending flange portion terminating the web portion so that the pole piece has a substantially T-shaped cross-section. The flange portions of two adjacent pole pieces define an axial slot giving access to a coil chamber between two web portions. A field coil is wound around the web portion of at least every other pole piece, preferably around the web portion of each of the pole pieces, so that the field coils are located in the coil chambers underneath the flange portions. It shall be appreciated that each of the slots has a trapezoidal cross-section radially tapering to the outside and that a closing permanent magnet with a trapezoidal cross-section is axially inserted in each of the slots, the direction of magnetization of the magnets being essentially tangential. The trapezoidal cross-section of the closing magnet substantially corresponds to the trapezoidal cross-section of the slot in which it is inserted.

The rotor according to the invention has numerous advantages. In operation in an electric machine, the field coils of the rotor are conventionally connected and energized so that the flange portions of two adjacent pole pieces have opposed magnetic polarities, i.e. one is north (N) and the other is south (S). Hence, in circumferential direction, the rotor has n salient poles, alternatively N and S. In order to reduce flux leakage, the closing permanent magnets are oriented in the slots so that their magnetic poles face flange portions of same magnetic polarity, i.e. the N pole of each magnet is in contact with a N flange portion and the S pole of each magnet is in contact with a S flange portion. Hence, the permanent magnets in the slots allow to prevent the short-circuit of magnetic flux between two adjacent flange portions through the air gap that would otherwise exist if the slots were empty. It follows that, as flux leakage is reduced, magnetic coupling between the rotor and a stator of the electric machine is increased. Secondly, as short-circuit between two adjacent flange portions can be restricted, the size of the flange portions in circumferential direction can be increased, whereby the efficiency of the electrical machine is increased. For example, in a rotor with 12 pole pieces, it is possible to increase the size of the flange portions in circumferential direction so that each of them extends over about 25 degrees. Thirdly, the closing permanent magnets are easily mounted into the slots, as it suffices to insert them axially. Moreover, they do not need any fixing means since they are maintained in the slots by the magnetic force. Furthermore, the trapezoidal cross-sectional shape of the magnets, tapering to the outside, implies that the magnets cannot get out from the slots due to centrifugal forces. Such a trapezoidal cross-section also allows the repartition of the centrifugal forces on the sides of the magnets in contact with the flange portions, thereby avoiding damage to the permanent magnets due to centrifugal force concentration. Another advantage is that by using slots and magnets of trapezoidal cross-section, more flexibility in manufacturing tolerances can be allowed, as a trapezoidal element easily fits into a trapezoidal slot. Furthermore, if the magnets are made of sufficiently resistant material, they allow to retain the field coils in the coil chambers.

The flange portions and the closing permanent magnets preferably form a continuous outer shell with a substantially constant thickness. In other words, the slots are filled approximately over their whole height by the closing magnets, whereby the harmonical noise due to the n slots is reduced. Besides, the rotor is more symmetrical, which benefits to the mass-balance.

Advantageously, the closing permanent magnets are bars with a trapezoidal cross-section, the angle between the lateral sides of the trapezoid and the base being preferably 60 to 70°.

This shape allows a good compromise between repartition of centrifugal forces on the sides of the closing permanent magnets and manufacturing tolerances of the slots and permanent magnets.

Preferably, the closing permanent magnets are slightly in retreat in the slots with respect to the outer side of the flange portions so that the closing permanent magnets do not protrude into the air gap in between rotor and stator.

The closing permanent magnets may be fixed to the flange portions in the slots by means of glue. A layer of glue between magnet and flange portion acts as an dampening layer which ensures a better resistance to vibrations. The presence of glue layers between permanent magnets and flange portions causes very small spaces to exist between these elements, which however do not affect the effect produced by the permanent magnets. However, the glue should preferably comprise finely divided ferromagnetic material.

The core armature is advantageously made of laminated ferromagnetic material. Such an armature can be easily manufactured by piling magnetic plates, which are identical in shape with each other and include the n pole pieces. The magnetic plates are preferably made of a soft ferromagnetic material as no remanent magnetization is desired when the field coils of the rotor are not energized.

It shall be appreciated that the rotor according to the invention is particularly suited to be used in synchronous generators for the automotive industry. Indeed, a generator equipped with such a rotor can be operated in a saturated state and over a variety of speeds, whereas a generator equipped with a conventional salient-pole rotor would be inefficient in such operating conditions, mainly because of flux leakage.

According to another aspect of the invention, a method for manufacturing a wound salient-pole type rotor for an electric machine is proposed. In a first manufacturing step, a core armature forming n radial pole pieces, equally spaced by 360/n degrees, is provided. Each of the pole pieces has a radially projecting web portion and a circumferentially extending flange portion terminating the web portion so that the pole piece has a substantially T-shaped cross-section. Moreover, the flange portions of two adjacent pole pieces define an axial slot giving access to a coil chamber between two web portions. In a next manufacturing step, field coils are wound around the web portion of at least every other pole piece, preferably around the web portion of each of the pole pieces, so that the field coils are located in the coil chambers underneath the flange portions and so that when the field coils are energized, two adjacent flange portions have opposed magnetic polarities. It shall be appreciated that a closing permanent magnet with a trapezoidal cross-section is inserted in each of the slots. Each of the slots has a trapezoidal cross-section radially tapering to the outside and the trapezoidal cross-section of the closing magnet substantially corresponds to the trapezoidal cross-section of the slot in which it is inserted. Moreover, the closing permanent magnets are oriented in the slots in such a way that the magnetic poles of the permanent magnets face flange portions of pole pieces having same magnetic polarity. In addition to the already mentioned advantages provided by the use of the trapezoidal permanent magnets, the method of the invention illustrates how it can be made use of the slots, which are needed for field coil winding and individualization of the poles, to improve the efficiency of a rotor in an electric machine.

### Brief description of the drawings

The present invention will now be described, by way of example, with reference to the accompanying drawing, in which:

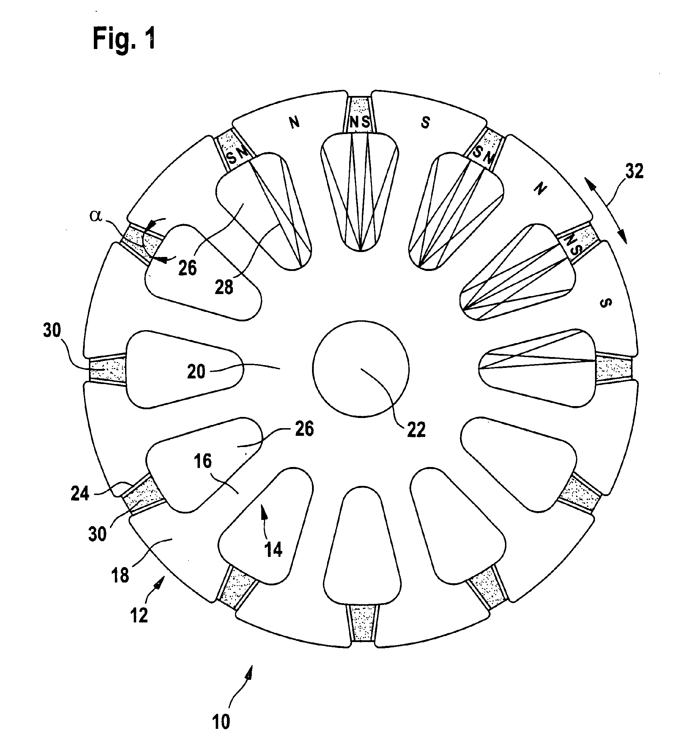

- Fig.1:: is a frontal view of a preferred embodiment of a rotor in accordance with the invention.

### Detailed description of a preferred embodiment

Fig.1 shows a frontal view of a preferred embodiment of a rotor 10 in accordance with the invention. It comprises a core armature, generally indicated 12, forming twelve radial pole pieces 14 equally spaced by 30 degrees. Each of the pole pieces 14 has a radially projecting web portion 16 and a circumferentially extending flange portion 18 terminating the web portion 16 so that the pole piece 14 has a substantially T-shaped cross-section. All of the pole pieces 14 extend from a tubular portion 20 of the armature 12. The tubular portion 20 defines a through hole 22 adapted to receive a rotary shaft for mounting in an electric machine, such as e.g. a synchronous generator. In such a generator, the rotor 10 rotates in a stator structure adapted to the twelve poles of the rotor 10. For example, the stator structure may comprise 36 notches and a tri-phased winding. The core armature 12 is preferably made of laminated soft magnetic steel. It can be manufactured by piling magnetic plates having the shape of the armature illustrated in Fig.1. This means that all the magnetic plates are preferably identical and include the twelve pole pieces. The flange portions 18 of two adjacent pole pieces 12 define an axial slot 24, which gives access to a coil chamber 26 between two web portions 16. Field coils 28 are wound around the web portions 16 of each of the pole pieces 14 so that the field coils 28 are located in the coil chambers 26 underneath the flange portions 18. Moreover, the field coils 28 are connected in such a way that, when energized, the flange portions 18 of two adjacent pole pieces 14 have opposed magnetic polarities, i.e. one is north (N) and the other is south (S). This could also be achieved by providing only one field coil around the web portion of every other pole piece; the pole piece supporting the field coil would thus be e.g. a N pole and the adjacent, coil free pole piece would be necessarily a S pole to allow closure of the magnetic circuit. Hence, in circumferential direction, the rotor has 12 salient poles, alternatively N and S. In Fig.1, only four field coils 28 are represented.

It shall be appreciated that a closing permanent magnet 30 is situated in each of the slots 24 defined by the flange portions 18. As can be seen in Fig.1, the slots 24 have a trapezoidal cross-section radially tapering to the outside, i.e. opposite to the tubular portion 20. The permanent magnets 30 are bars with a trapezoidal cross-section corresponding to the cross-section of the slots 24 and which are axially inserted in the slots 24. The direction of magnetization in the permanent magnets 30 is such that it traverses the lateral sides of the trapezoid, i.e. adjacent to the base, so that either one of the two lateral sides of the magnets forms a magnetic pole. The permanent magnets 30 are oriented in the slots 24 in such way that their magnetic poles face flange portions 18 of pole pieces 14 having same magnetic polarity. As a result, the direction of magnetization of the permanent magnets 30 is essentially tangential oriented, as shown by the double arrow 32 in Fig.1. Suitable magnetic materials for the permanent magnets 30 are e.g. neodymium-iron, samarium-cobalt, or ferrite. The permanent magnets 30 restrict flux short-circuit between the flange portions 18 of two adjacent pole pieces 14 so that a maximum of flux passes to the stator, whereby the magnetic coupling of the generator is improved.

Typically, the magnetic circuit in operation is the following. Starting from an arbitrary pole piece with an N flange portion, magnetic flux is generated by the field coil surrounding the web portion of this starting pole piece, extends to the N flange portion, through the air gap to the stator, and therefrom into the neighboring S flange portions of adjacent pole pieces, through the web portions, and then through the tubular portion to the web portion of the starting pole piece, whereby the magnetic circuit is completed. It is thus clear that if the permanent magnets were not provided in the slots, a not insignificant part of the flux would directly pass to the neighboring flanges instead of passing to the stator.

It shall be noted that the use of slots 24 with a trapezoidal cross-section tapering to the outside and of permanent magnets 30 of corresponding shape allow an easy and fool proof assembly of the magnets 30. Indeed, there is only one position in which the magnets 30 fit into the slots 24. Moreover, the magnets 30 do not need to be fixed in the slots 24, since they are kept in place due to magnetic forces. When the rotor 10 rotates, the magnets 30 cannot get out of the slots 24 under the action of centrifugal forces, as the slots 24 taper to the outside. In this preferred embodiment, the magnets 30 are however fixed to the flange portions 18 in the slots 24 by means of glue containing finely divided magnetic material. This improves the resistance of the rotor 10 to vibrations.

It shall further be noted that the trapezoidal shape of the magnet 30 allows the repartition of centrifugal forces on the lateral sides thereof, whereby stresses are advantageously managed. Indeed, this permits to avoid the concentration of forces on localized zones of the magnets, which could produce stresses that would damage the magnets.

In Fig.1, each permanent magnet 30 is shown as isosceles trapezoid, the small base being located to the outside and the large base, parallel to the small one, facing the inside of the rotor. In order to obtain a good compromise between ease of fitting in the slots and stress management in the magnet, the angle α between the lateral sides of the trapezoid and the large base, see Fig.1, should preferably be 60 to 70°.

Furthermore, the magnets are advantageously in retreat with respect to the outer sides of the flanges so that the magnets do not protrude into the air gap between rotor and stator.

It is clear that, as the closing permanent magnets 30 are inserted in the slots 24 after the winding of the field coils 28, the height of the magnets 30 should be determined in function of the space occupied by the field windings 28. For example, in Fig.1, the field coils 28 are directly beneath the slots 24. Hence, the height of the magnets 30 should be such that they do not protrude into the coil chambers 26.

It shall be noted that, as shown in Fig.1, at the level of the connections to the flange portion 18 and to the tubular portion 20, the web portion 16 of each pole piece 14 is enlarged. Such a preferred structure permits to enhance the resistance of the rotor to mechanical stresses. It is particularly interesting with rotors intended to rotate at speeds above 3000-5000 RPM. However, for rotors intended to rotate at low speeds, e.g. below 3000 RPM, mechanical reinforcement is less interesting, and the pole pieces may have a T-shape with sharper corners.

## Claims

1. A wound salient-pole type rotor for an electric machine, comprising:
a core armature (12) forming n radial pole pieces (14) equally spaced by 360/n degrees, each of said pole pieces (14) having a radially projecting web portion (16) and a circumferentially extending flange portion (18) terminating said web portion (16) so that said pole piece (14) has a substantially T-shaped cross-section, wherein the flange portions (18) of two adjacent pole pieces (14) define an axial slot (24) giving access to a coil chamber (26) between two web portions (16);
field coils (28) wound around the web portion (16) of at least every other pole piece (14), so that said field coils (28) are located in said coil chambers (26) underneath said flange portions (18);
**characterized by**
a closing permanent magnet (30) with a trapezoidal cross-section axially inserted in each of said slots (24), wherein each of said slots (24) has a trapezoidal cross-section radially tapering to the outside and the trapezoidal cross-section of said closing permanent magnet (30) substantially corresponds to the trapezoidal cross-section of the slot (24) in which it is inserted and wherein the direction of magnetization of said closing permanent magnet (30) is substantially tangential.

2. The wound salient-pole type rotor according to claim 1, **characterized in that** said flange portions (18) and said closing magnets (30) form a continuous outer shell with a substantially constant thickness.

3. The wound salient-pole type rotor according to claim 1 or 2, **characterized in that** the closing permanent magnets (30) are bars with a trapezoidal cross-section, the angle between the lateral sides of the trapezoid and the base being 60 to 70°.

4. The wound salient-pole type rotor according to anyone of the preceding claims, **characterized in that** said closing permanent magnets (30) are in retreat with respect to said flange portions (18).

5. The wound salient-pole type rotor according to anyone of the preceding claims, **characterized in that** each of said closing permanent magnets (30) is fixed in its respective slot (24) by means of glue, preferably containing finely divided ferromagnetic material.

6. The wound salient-pole type rotor according to anyone of the preceding claims, **characterized in that** said core armature (12) is made of laminated ferromagnetic material, preferably soft-ferromagnetic material.

7. The wound salient-pole type rotor according to anyone of the preceding claims, **characterized in that** a field coil (28) is wound around the web portion (16) of each of the pole pieces (14).

8. A method for manufacturing a wound salient-pole type rotor for an electric machine, comprising the following steps:
providing a core armature forming n radial pole pieces equally spaced by 360/n degrees, each of said pole pieces having a radially projecting web portion and a circumferentially extending flange portion terminating said web portion so that said pole piece has a substantially T-shaped cross-section, wherein the flange portions of two adjacent pole pieces define an axial slot giving access to a coil chamber between two web portions;
winding field coils around the web portion of at least every other pole piece, so that the field coils are located in said coil chambers underneath said flange portions and so that when said field coils are energized two adjacent flange portions have opposed magnetic polarities;
**characterized by the step of**
axially inserting a closing permanent magnet with a trapezoidal cross-section in each of said slots, wherein each of said slots has a trapezoidal cross-section radially tapering to the outside and the trapezoidal cross-section of said closing magnet substantially corresponds to the trapezoidal cross-section of the slot in which it is inserted and wherein the closing permanent magnets are oriented in the slots in such a way that the magnetic poles of the magnets face flange portions of pole pieces having same magnetic polarity.

9. The method according to claim 8, **characterized in that** field coils are wound around the web portion of each of the pole pieces.
